## Europäisches Patentamt

## European Patent Office

## Office européen des brevets

(19)

(11) Veröffentlichungsnummer: **0 044 910**
**B1**

(12)

# EUROPÄISCHE PATENTSCHRIFT

(45) Veröffentlichungstag der Patentschrift:
**12.03.86**

(51) Int. Cl.⁴: **B 23 K 35/28,** B 23 K 11/18,
C 22 C 21/00

(21) Anmeldenummer: **81103247.3**

(22) Anmeldetag: **30.04.81**

(54) **Verfahren zur Verbesserung der Punktschweissbarkeit von Aluminium-Magnesium Legierungen.**

(30) Priorität: **26.07.80 DE 3028414**

(43) Veröffentlichungstag der Anmeldung:
**03.02.82 Patentblatt 82/5**

(45) Bekanntmachung des Hinweises auf die Patenterteilung:
**12.03.86 Patentblatt 86/11**

(84) Benannte Vertragsstaaten:
**AT BE CH FR GB IT LI LU NL SE**

(56) Entgegenhaltungen:
**DE - A - 2 143 965**
**DE - A - 2 234 111**
**DE - B - 1 107 945**
**DE - B - 2 412 844**
**US - A - 3 179 582**
**US - A - 3 384 477**

(73) Patentinhaber: **VEREINIGTE ALUMINIUM-WERKE AKTIENGESELLSCHAFT,**
**Postfach 2468 Georg-von-Boeselager-Strasse 25,**
**D-5300 Bonn 1 (DE)**

(72) Erfinder: **Klock, Horst, Dipl.-Ing., Im Auel 36,**
**D-5357 Swisttal (DE)**
Erfinder: **Falkenstein, Heinz-Peter, Dipl.-Ing.,**
**Königsheimstrasse 15, D-5300 Bonn 3 (DE)**

(74) Vertreter: **Müller-Wolff, Thomas, Dipl.-Ing., c/o**
**Vereinigte Aluminium-Werke AG Patentabteilung**
**Postfach 2468, D-5300 Bonn 1 (DE)**

## Beschreibung

Die Erfindung betrifft ein Verfahren zur Verbesserung der Punktschweissbarkeit von Aluminium-Magnesium-Legierungen.

Aus der DE-AS 1 107 945 ist die Verwendung von AlZnMg-Legierungen als Werkstoff für Schweisskonstruktionen bekannt. Beim Erschmelzen derartiger Legierungen soll durch Zusatz von geringen Mengen von Beryllium der starke Abbrand des Magnesiums verringert und ausserdem die Krätze und Schaumbildung vermieden werden. An derart hergestellten Legierungen hat sich gezeigt, dass die der Schweissnaht benachbarten Zonen, die beim Schweissen die kritische Anlasstemperatur von 50 bis 150 °C annehmen, frei von Spannungsrisskorrosion bleiben. Aus dem Gesamtzusammenhang ist ersichtlich, dass es bei dieser Veröffentlichung um das übliche Schmelzschweissen von Al-Legierungen geht, nicht jedoch um punktschweissbare Aluminiumwerkstoffe.

Es ist bekannt, sowohl aushärtbare als auch nicht aushärtbare Aluminiumlegierungen punktzuschweissen. Dabei werden die zu verbindenden Teile zwischen zwei sich gegenüberstehende Elektroden gebracht und gegeneinandergepresst. Bei Stromfluss erhitzen sich die Teile an den Berührungsflächen unter Bildung einer Schweisslinse durch Widerstandserwärmung, die nach ihrer Erstarrung beide Teile miteinander verbindet.

In zahlreichen Versuchen wurde festgestellt, dass in Abhängigkeit von der Stromstärke und der damit verbundenen Schweisstemperatur, dem Elektrodenwerkstoff und der chemischen Zusammensetzung der zu verbindenden Teile und dem Oberflächenwiderstand die Standzeiten der Punktschweisselektroden variieren.

Als Werkstoff für den Fahrzeugbau werden u.a. Aluminium-Magnesium-Werkstoffe eingesetzt. Die hohe Diffusionsgeschwindigkeit von Magnesium in Aluminium führt bei der rekristallisierenden Weichglühung – Temperaturbereich 300 bis 500 °C – zu einer Anreicherung von Magnesium und Magnesiumoxid in der Oxidschicht.

Die verstärkte, an Magnesium angereicherte Oxidhaut führt in der Praxis zu geringen Elektrodenstandzeiten, da sich auf der Kontaktfläche zur Elektrode Ablagerungen bilden.

In der Luftfahrtindustrie ist es daher üblich, Aluminiumbleche vor dem Widerstandspunktschweissen zu beizen. Diese chemische Behandlung setzt sich zusammen aus einer Vorbehandlung in Salpetersäure, Natronlauge und wiederum Salpetersäure. Für Grossserien, wie sie im Fahrzeugbau üblich sind, kann eine solche chemische Behandlung nicht durchgeführt werden.

Aufgabe der vorliegenden Erfindung ist es, ein Verfahren zur Verbesserung der Punktschweissbarkeit von Aluminium-Magnesium-Legierungen anzugeben, die eine Erniedrigung des Oberflächenwiderstandes der Aluminium-Legierung und eine Erhöhung der Standzeit der Elektrode ermöglichen, wobei die Werte über den Querschnitt bzw. die gesamte Coilbreite möglichst konstant bleiben sollen. Erfindungsgemäss wird diese Aufgabe durch den Zusatz von Beryllium im Bereich von 0,0005 bis 0,005 Gewichtsprozent gelöst.

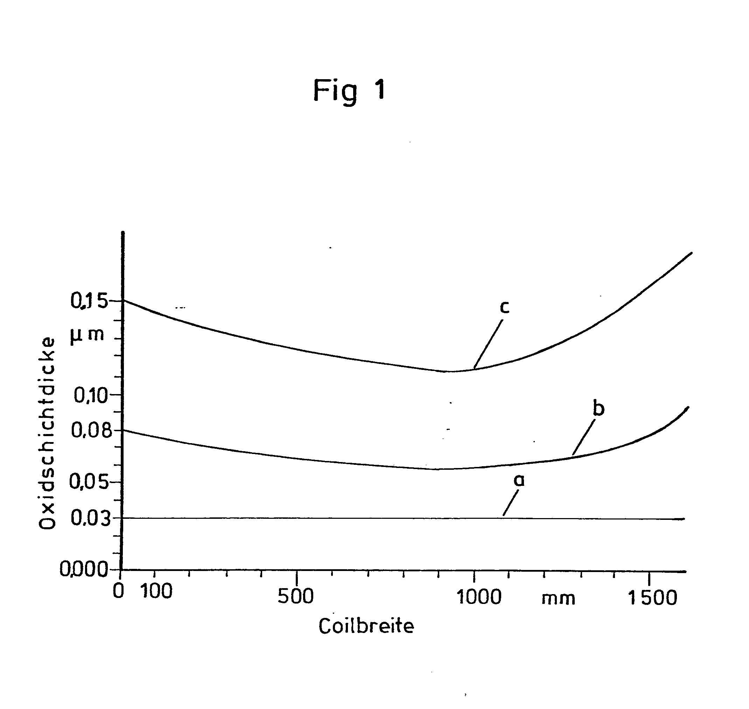

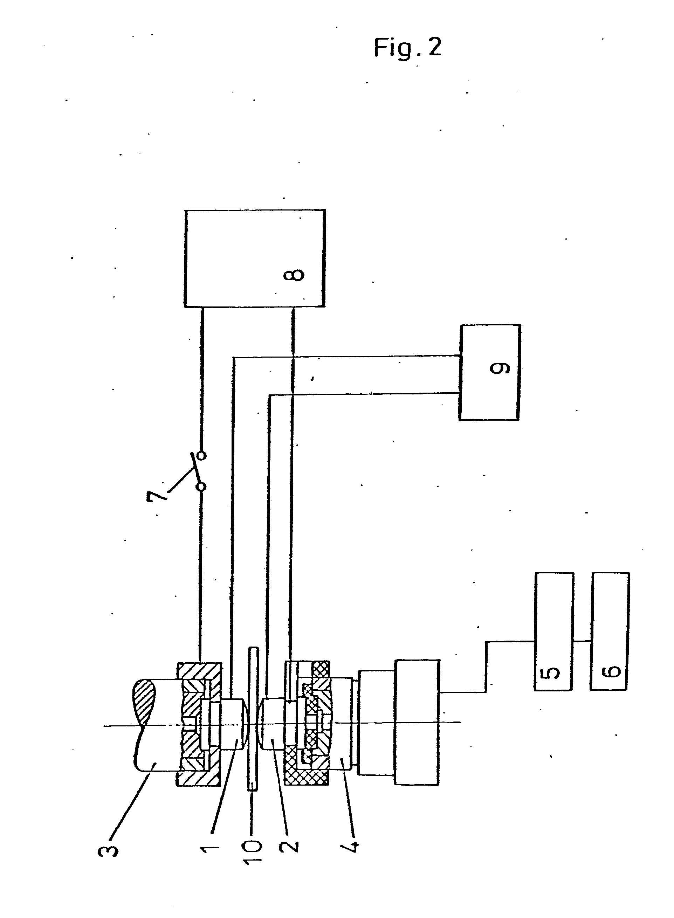

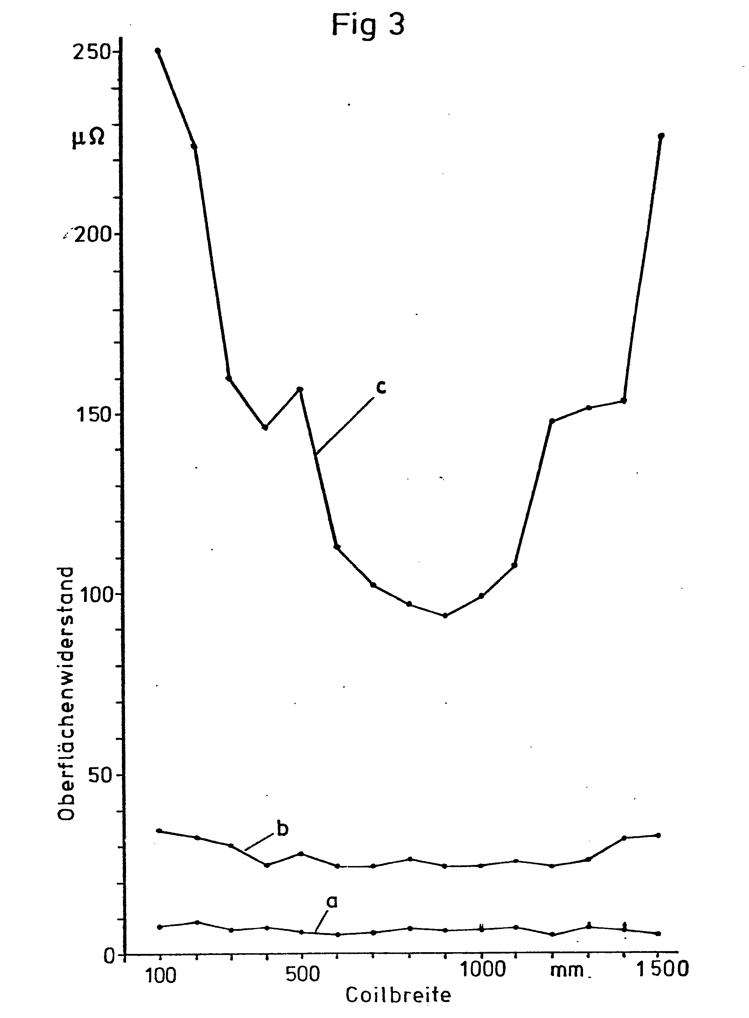

Im folgenden wird die Erfindung anhand mehrerer Beispiele näher erläutert. Dabei werden in Fig. 1 drei Bleche untersucht, und zwar a Blech AlMg5 – gebeizt und geglüht, b Blech AlMg5 mit 20 ppm Be geglüht und c Blech AlMg5 ohne Be geglüht. Fig. 2 zeigt einen Messaufbau zur Bestimmung der Widerstände und Fig. 3 die Bleche a, b, c analog zur Fig. 1.

In Fig. 1 ist der Verlauf der Oxidschichtdicke über der Breite des Coils aufgetragen. Das Coil a wurde eine Stunde mit Salpetersäure (1 : 1) gebeizt, bei RT 1 min mit Natronlauge und anschliessend bei 60 °C für 30 sec mit Salpetersäure (1 : 1) behandelt. Danach weist das gebeizte Blech die niedrigsten und gleichmässigsten Oxidschichtdicken über der Coilbreite auf. Durch den Zusatz von 20 ppm Beryllium verringert sich die Oxidschichtdicke um knapp 50% im Vergleich zu der Variante ohne Beryllium. Bei den ungebeizten Proben (b und c) ist die Abhängigkeit der Oxidschichtdicke von der Coilbreite festzustellen.

Die Messmethode zur Bestimmung der Oxidschichten ist in DIN 50 944 beschrieben.

Danach wurde die Oxidschicht chemisch vom Grundmaterial abgelöst und der dabei entstehende Gewichtsverlust durch Wägen der Probe vor und nach dem Ablösen bestimmt. In vorliegendem Fall werden Streifen von 5 × 5 cm² Fläche alle 20 cm über der Bandbreite entnommen. Aus dem Gewichtsverlust und einer angenommenen durchschnittlichen Dichte der Oxidschicht von 2,75 g/cm³ wurden die Mittelwerte für die Dicke der Oxidschicht ermittelt.

Neben der Dicke hat auch die chemische Zusammensetzung der Oxidschicht Einfluss auf den Oberflächenwiderstand. Mit Hilfe des in Fig. 2 dargestellten Versuchsaufbaues wurde der Oberflächenwiderstand für die drei in Fig. 1 dargestellten Werkstoffe bestimmt.

Die beiden Messelektroden 1, 2 werden durch einen regelbaren Hydraulikzylinder 3 angepresst. Unter der fest montierten unteren Elektrode 2 befindet sich eine Kraftmessdose 4. Der Messverstärker 5 mit Digitalanzeige 6 gibt die jeweilige Anpresskraft an, die ggfs. mit einem Druckminderventil reguliert werden kann (nicht dargestellt).

Erst nachdem sich die Anpresskraft stabilisiert hat, wird der Schalter 7 geschlossen. Die Gleichstromquelle 8 liefert – bei einer Spannung von 4 V – eine konstante Stromstärke von 20 A.

Nach dem Ohmschen Gesetz

$$U = R \cdot I \text{ bzw. } R = \frac{U}{I}$$

kann aus dem am Digitalvoltmeter 9 angezeigten Spannungsabfall der Übergangswiderstand ermittelt werden.

Bei der Messung werden zunächst die Elektroden 1, 2 gereinigt und – durch Zusammenfahren der Elektroden ohne Blech – der Systemwiderstand gemessen.

Nach der Messung des Bleches 10, die sich aus je 11 Einzelmessungen zusammensetzt, wird nochmals der Systemwiderstand bestimmt und der Mittelwert aus der Anfangs- und Endmessung vom Mittelwert der 11 Einzelmessungen subtrahiert.

Die in Fig. 3 dargestellten Ergebnisse über die Messung des Oberflächenwiderstandes über die Coilbreite zeigen erwartungsgemäss für die gebeizten Blechabschnitte die niedrigsten und gleichmässigsten Widerstandswerte. Das mit Beryllium legierte Blech weist im Vergleich zu den berylliumfreien und ungebeizten Proben ca. 80% günstigere Werte auf, die über die Coilbreite nahezu konstant sind.

Im Gegensatz zu den Werten der Oxidhautdicke zeigt sich bei der Widerstandsmessung also kein Einfluss der Coilbreite. Dies ist vermutlich zu erklären durch den Einfluss des Berylliums auf die Zusammensetzung der Oxidhaut.

**Patentanspruch**

1. Verfahren zur Verbesserung der Punktschweissbarkeit von Aluminium-Magnesium-Legierungen, gekennzeichnet durch einen Zusatz von Beryllium im Bereich von 0,0005 bis 0,005 Gew.-%.

**Claim**

1. A process for the improvement of spot weldability of Al-Mg-alloys, characterized by an addition of beryllium within the limits of 0.0005 to 0,005 weight-%.

**Revendication**

1. Procédé d'amélioration de soudabilité par points des alliages Al-Mg, caractérisé par le fait que l'addition de béryllium se situe entre 0.0005 et 0.005% en poids.

# Fig 1

# Fig. 2

# Fig 3